# EUROPEAN PATENT SPECIFICATION

(11) **EP 0 595 633 B1**
(45) Date of publication and mention of the grant of the patent: **16.12.1998**
(21) Application number: 93308594.6
(22) Date of filing: 28.10.1993
(51) Int. Cl.: G11B 5/53, G11B 15/12

(54) **Magnetic recording/reproducing apparatus**
Magnetisches Aufzeichnungs-/Wiedergabegerät
Appareil magnétique d'enregistrement/lecture

(30) Priority: 28.10.1992 JP 289912/92; 28.01.1993 JP 12372/93
(43) Date of publication of application: 04.05.1994
(73) Proprietor: KABUSHIKI KAISHA TOSHIBA, Kawasaki-shi, Kanagawa-ken 210 (JP)
(72) Inventor: Yamada, Masatoshi, c/o Intellectual Property Div., Tokyo (JP); Koga, Takashi, c/o Intellectual Property Div., Tokyo (JP)
(74) Representative: O'Connell, David Christopher

(56) References cited:
- EP-A- 0 172 441
- EP-A- 0 399 812
- DE-A- 3 715 884
- US-A- 4 985 785
- PATENT ABSTRACTS OF JAPAN vol. 8, no. 65 (P-263) 27 March 1984 & JP-A-58 211 319 (SONY) 8 December 1983

## Description

The present invention relates generally to a magnetic recording/reproducing apparatus, and more particularly, to a magnetic recording/reproducing apparatus of a helical scanning type which has a plurality of magnetic head and corresponding amplifiers within a rotary cylinder.

There are known some examples of magnetic recording/reproducing apparatus which have a plurality of magnetic heads and amplifier circuits mounted on a rotary cylinder to amplify a recording signal and a reproduced signal, and to select the reproduced signal. As an example of such apparatus. Japanese Patent Application; Tokkai-Sho 60-242501 will be explained with reference to FIGURE 1.

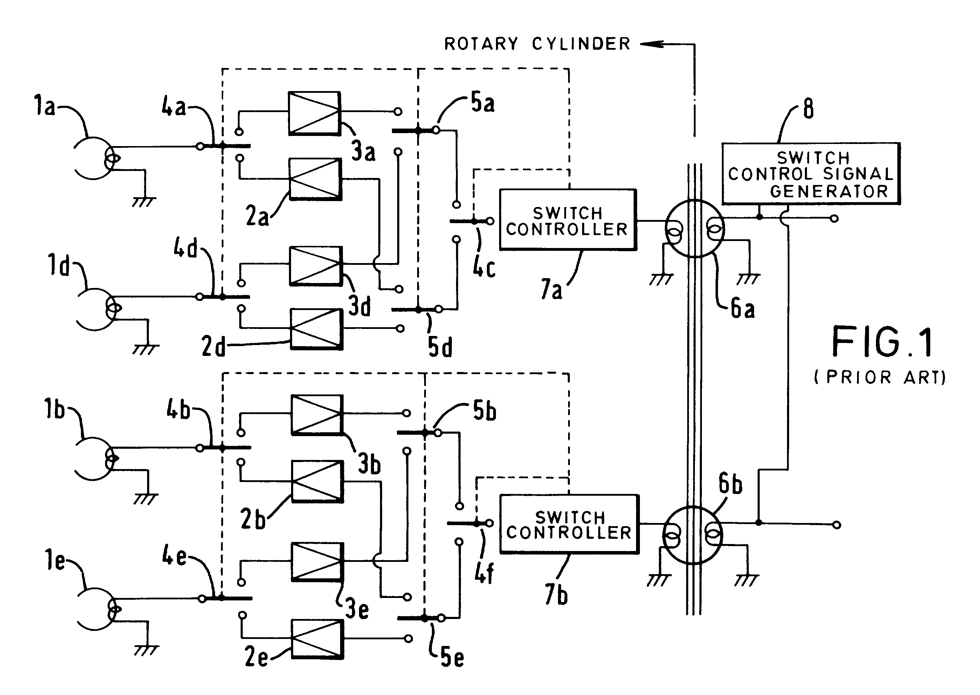

In FIGURE 1, a narrow track magnetic head 1a for an extended recording/reproducing operation on even number fields, another narrow track magnetic head 1b for the extended recording/reproducing operation on odd number fields, a wide track magnetic head 1d for a normal recording/reproducing operation on even number fields, another wide track magnetic head 1e for the normal recording/reproducing operation on odd number fields. These magnetic heads are adapted for a selective connection to recording amplifiers 2a, 2b, 2d, 2e or to reproducing amplifiers 3a, 3b, 3d, 3e through recording/reproducing mode switches 4a, 4b, 4d, 4e, respectively. Further, these magnetic heads are adapted for a selective connection to rotary transformers 6a, 6b through switch controllers 7a, 7b for selecting between normal operation/extended operation mode switchs 5a, 5b, 5d, 5e, and recording/reproducing mode switchs 4c, 4f.

Further, the recording/reproducing mode switchs 4a - 4f and a normal operation/extende operation mode select switches 5a, 5b, 5c, 5d, 5e is changed by the switch controllers 7a, 7b. The signal to controller-changing switches 7a, 7b transfer through rotary transformers 6a, 6b, from the switch control signal generator 8 connected to a coil on the main-body side of the magnetic recording/reproducing apparatus of rotary transformers 6a, 6b that transfer the recording reproduced signal.

At the beginning of putting on the power supply, switch controllers 7a, 7b are in the condition of receipt the control signal. And when the control signal is transmitted, it generates the changing signal from the very signal, and transmit it to each switches-first is to standard/long-time head changing signal, next is to recording, reproducing changing signal. Through this changing signal, each switches is changed, and after complete it, it transmits the recording signal or reproduced signal. If the mode is changed, first, cuts off the power supply of switch controllers 7a, 7b, and, makes the mode in the clear condition, next, transmits the control signal again.

However, the above-mentioned magnetic recording/reproducing apparatus cannot transmit the recording.reproduced signal while, transmitting the control signal. And, there is another detect that it cannot transmit the control signal based on the information which can be given generation power to magnetic recording/reproducing apparatus in itself through a rotary cylinder.

As annother example of such apparatus, Japanese Patent Application; Tokkai-Hei 2-14402 will be explained in reference to FIGURE 2. ignal.

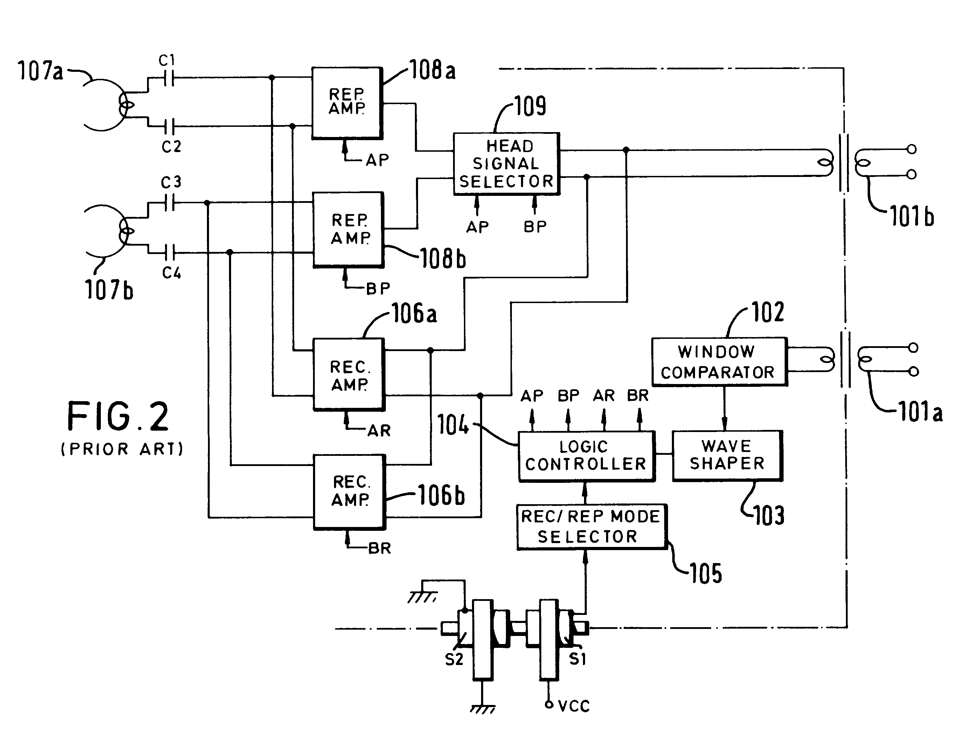

In FIGURE 2, a power source voltage Vcc and a ground potential GN is supplied through slip rings S1, S2. In this case, the power source voltage Vcc is changed in different voltages in the recording mode and the reproducing mode. A head selector signal is transmitted to circuits in the rotary cylinder through a rotary transformer 101a, and input to a wave shaper 103 through a window comparator 102. An output of the wave shaper 103 is sent to a logic controller 104. The logic controller 104 is also supplied with a recording/reproducing switch signal from a recording/reproducing mode selector 105. The recording/reproducing mode selector 105 detects the voltage level of the power source voltage Vcc supplied through the slip ring S1 to generate the recording/reproducing switch signal.

The logic controller 104 also generates channel changing signals AP, BP in the reproducing operation and channel changing signals AR, BR in the recording operation, based on signals from the wave shaper 103 and the recording/reproducing mode selector 105. On the other hand the recording signal supplied through a rotary transformer 101b is input to recording amplifiers 106a, 106b. The recording amplifiers 106a, 106b are turned ON or OFF under the control of the channel changing signals AR, BR supplied from the logic controller 104. Outputs of the amplifiers 106a, 106b are then transmitted to magnetic heads 107a, 107b through capacitors C1, C2, C3, C4.

Signals reproduced from the magnetic heads 107a, 107b are input to reproducing amplifier 108a, 108b. The reproducing amplifiers 108a, 108b are alternately turned ON or OFF under the control of the channel changing signals AP, BP supplied from the logic controller 104. Outputs of the reproducing amplifier 108a, 108b are then transmitted to a head signal selector 109. That head signal selector 109 is controlled by the channel changing signals AP, BP supplied by logic controller 104 to select the outputs of reproducing amplifier 108a, 108b one after another and outputs the selected signal through a rotary transformer 101b.

However, the above mentioned magnetic recording/reproducing apparatus is relatively expensive due to the use of one channel of rotary transformer for transmitting control signals such as head selection signals.

As described above, the first conventional magnetic recording/reproducing apparatus has a drawback that it cannot transmit the recording/reproduced signal while, transmitting the control signal. And, there is another drawback that it cannot transmit the control signal based on the information which can be given generation power to magnetic recording/reproducing apparatus in itself through a rotary cylinder.

Further, the second conventional magnetic recording/reproducing apparatus has a drawback of cost problem due to the use of one channel of rotary transformer for transmitting control signals such as the head selection signal.

GB-A-2191327 discloses a magnetic recording/reproducing apparatus comprising:
a rotary cylinder, having at least one of a recording amplifier or a reproducing amplifier;
a stationary part;
a rotary transformer, for transferring signals between the rotary cylinder and the stationary part;
means for receiving an audio frequency band FM signal; and
means for receiving a control signal which controls at least the recording amplifier or the reproducing amplifier. The control signal is superposed on a power supply signal transferred between the rotary part and the stationary part.

According to the present invention, there is provided a magnetic recording/reproducing apparatus comprising:
a rotary cylinder, having at least one of a recording amplifier or a reproducing amplifier;
a stationary part;
a rotary transformer, for transferring signals between the rotary cylinder and the stationary part;
means for receiving an audio frequency band FM signal; and
means for receiving a control signal which controls at least the recording amplifier or the reproducing amplifier;
characterised by:
means for superposing the control signal on the audio frequency band FM signal for transfer on one channel of the rotary transformer; and
means located in the rotary cylinder for separating the audio frequency band FM signal and the control signal.

Additional objects and advantages of the present invention will be apparent to persons skilled in the art from a study of the following description and the accompanying drawings, which are hereby incorporated in and constitute a part of this specification.

For a better understanding of the present invention and many of the attendant advantages thereof reference will be now be made by way of example to the accompanying drawings, wherein:
FIGURE 1 is a circuit diagram showing a conventional magnetic recording/reproducing apparatus;
FIGURE 2 is a circuit drawing showing another conventional magnetic recording/reproducing apparatus;
FIGURE 3 is a circuit diagram showing an embodiment of a magnetic recording/reproducing apparatus according to the present invention.

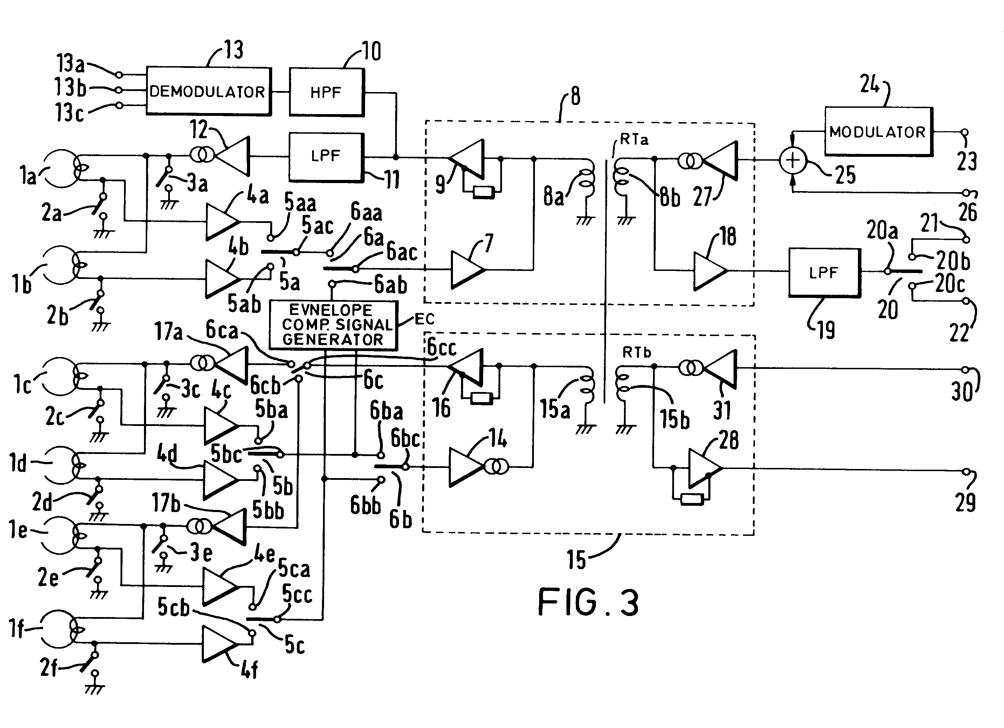

The present invention will be described in detail with reference to FIGURE 3.

Referring now to FIGURE 3, an embodiment of the magnetic recording/reproducing apparatus according to the present invention will be described in detail.

In FIGURE 3, 1a, 1b denote magnetic heads for audio signals. 1c, 1d denote magnetic heads for extended recording/reproducing operation of video signals. And, le, 1f denote magnetic heads for normal recording/reproducing operation of video signals. Each one end of the magnetic heads 1a - 1f is grounded through switches 2a - 2f, respectively. Also, each of the other ends 1a - 1f is grounded through switches 3a, 3c, 3e, respectively. One ends of switches 2a, 2b which other ends are grounded, are connected to fixed contacts 5aa, 5ab of a switch 5a through amplifiers 4a, 4b. One ends of switches 2c, 2d which other ends are grounded, are connected to fixed contacts 5ba, 5bb of the switch 5a through amplifiers 4c, 4d. Also one ends of switches 2e, 2f which other ends are grounded, are connected to fixed contacts 5ca, 5cb of a switch 5c through amplifiers 4e, 4f. A movable contact 5ac of the switch 5a is connected to a fixed contact 6aa of a switch 6a. A movable contact 5bc of a switch 5b is connected to a fixed contact 6ba of a switch 6b as well as connected to an envelope comparing signal generator EC. A movable contact 5cc of the switch 5c is connected to a fixed contact 6bb of the switch 6b as well as connected to the envelope comparing signal generator EC. A fixed contact 6ab of the switch 6a is connected to the envelope comparing signal generator EC.

A movable contact 6ac of the switch 6a is connected to one end of a rotary side coil 8a of a rotary transformer RTa, which other end is grounded, through an amplifier 7 in a two-way transmission circuit 8 as well as connected to the input of an amplifier 9. An output of the amplifier 9 is supplied to an HPF 10 and an LPF 11. Then an output of the LPF 11 is connected to the other ends of the magnetic head 1a, 1b through a current-output amplifier 12. An output of the HPF 10 is supplied to a demodulator 13. Thus a recording/reproducing control signal, a normal mode/extended mode switching signal, and a reproduced signal selecting signal are output from the demodulator 13, respectively.

A movable contact 6bc of a switch 6b is connected to one end of a rotary side coil 15a of a rotary transformer RTb, which other end is grounded, through an amplifier 14 in a two-way transmission circuit 15 as well as connected to the input of an amplifier 16. The output of the amplifier 16 is connected to a movable contact 6cc of a switch 6c. A fixed contact 6ca of the switch 6c is connected to each one end of the magnetic heads 1c, 1d through a current-output amplifier 17a. Another fixed contact 6bc of the switch 6c is connected to each one end of the magnetic heads 1e, 1f through another current-output amplifier 17b.

One end of a stationary side coil 8b of the rotary transformer RTa which other end is grounded, is connected to an LPF 19 through a voltage-output amplifier 18. An output of the LPF 19 is connected to a movable contact 20a of a switch 20. A fixed contact 20b of the switch 20 is connected to an output terminal 21 for supplying a reproduced audio FM signal. Another fixed contact 20c or the switch 20 is connected to an output terminal 22 for supplying an envelope comparing signal. 23 denotes an input-terminal for receiving a control signal. The input terminal 23 is connected to one input of an adder 25 through a modulator 24. 26 denotes another input terminal for receiving an audio frequency band FM recording signal. The input terminal 26 is connected to the other input of the adder 25. The output of the adder 25 is connected to the one end of the stationary side coil 8b of the rotary transformer RTa through a current-output amplifier 27.

The one end of the stationary side coil 15b of the other rotary transformer RTb which other end is grounded, is connected to an output terminal 29 for supplying a reproduced video signal. 30 denotes still another input terminal for receiving a recording video signal. The input terminal 30 is connected to the one end of the stationary side coil 15b through another current-output amplifier 31.

Now, a recording operation will be explained hereinafter. In case of the VHS system format, audio FM recording signals of 1.3 MHz and 1.7 MHz supplied to the input terminal 26 are transmitted to the rotary side of the rotary cylinder by a transmissible frequency band as high as possible, e.g., a band of 10 MHz - 12 MHz, and the signal modulating the control signal that is supplied to the input-terminal by modulator 24 and the signal superposed by adding-machine 25 transmit through the two-way transmission-circuit 8. In the rotary cylinder, the audio FM signal recording signal is separated through the LPF 11 while the control signal is separated through the HPF 10.

The control signal controls separately outputs a recording/reproducing/trick-play reproducing switching signal, a normal operation mode/extend operation mode switching signal, and a reproduced signal selecting signal from the outputs 13a - 13c of the demodulator 13. These signals control the switches 2a - 2f, 3a, 3c, 3e for switching the recording mode and the reproducing mode, the switch 6a for switching the normal reproducing and the trick-play reproducing, the switches 6b, 6c for the normal operation mode and the extended operation mode, and the switches 5a - 5c for selecting reproduced signals. In the control operation, the switches 2a - 2f become closed, while the switches 3a, 3c, 3e become open.

The audio FM signal is amplified by the amplifier 12 and recorded on a magnetic tape through the magnetic head 1a, 1b. The video signal supplied to the input-terminal 30 is transmitted to the rotary cylinder side through the two-way transmission circuit 15, for example, in case of long-time mode it is amplified by the amplifier 17a, and then recorded on the magnetic tape through the magnetic heads 1c, 1d.

Now, a reproducing operation will be explained hereinafter. The control signal controls the switches likely to the recording operation. Thus the switches 2a - 2f become open while the switches 3a, 3c, 3e become closed. Audio FM signals reproduced from the magnetic tape through the magnetic heads 1c, 1d are amplified by the amplifiers 4a, 4b. A specified one of the audio FM signals is selected by the switch 5a, and transmitted to the stationary side of the rotary cylinder through the two-way transmission-circuit 8, and then output from the output terminal 21 as the audio FM signal through the LPF 19 and the switch 20. For example in the extended operation mode, video signals reproduced from the magnetic tape through the magnetic heads 1c and 1d are amplified by the amplifiers 4c and 4d. A specified one of the reproduced video signals is selected by the switch 5b, and transmitted to the stationary side of the rotary cylinder through the two-way transmission-circuit 15, and then output from the output terminal 29.

Now, a trick-play reproducing will be explained hereinafter. Output levels of the magnetic heads 1c - 1f vary in crossing a plurality of tracks on the magnetic tape. To keep a reproduced display image clear, it is necessary to select a higher level signal within signals reproduced by the normal operation head and the extended operation head. to secure the above requirement, an envelope comparing signal becomes necessary. While the control signal is transmitted to respective switches like to the recording operation. In the operation, thus the switches 2a - 2f become open while the switches 3a, 3c, 3e become closed.

The video signals reproduced from the extended operation magnetic heads 1c, 1d and the other video signals reproduced from the normal operation magnetic heads le, 1f are amplified by the amplifier 4c - 4f, respectively. These video signals are selected by the switches 5b, 5c, and then input to the envelope comparing signal generator EC, wherein an envelope comparing signal is generated by being modulated into the frequency band the same as the audio FM signal. Since it is not necessary to transmit audio signals in the trick-play reproducing operation, the envelope comparing signal generator EC is connected to the two-way transmission-circuit 8 by switching the contact of the switch 6a to the fixed contacts 6ab, so that the envelope comparing signal is transmitted likely to the reproduced audio FM signal, and then output through the switch 20.

In the present embodiment, by superposing the control signal supplied to the input terminal 23 with the audio FM signal supplied to the input terminal 26, it is possible to transmit both the audio FM signal and the control signal through only the one channel, i.e., the rotary transformer RTa. Also it is possible to transmit the video signals through only one channel, e.g., the rotary transformer RTb, even if the video magnetic heads has increased. So that, it become possible to transmit a plurality of necessary signals through a relatively small number of channels, e.g., the two channels of the rotary transformers RTa, RTb.

As described above, the present invention can provide an extremely preferable magnetic recording/reproducing apparatus, as that it is able to transmit the audio FM signal and the control signal through only the two channels of rotary transformers. Also it is able to transmit video signals through only one channel of rotary transformer, even if a number of magnetic heads has increased.

## Claims

1. A magnetic recording/reproducing apparatus comprising:
a rotary cylinder, having at least one of a recording amplifier or a reproducing amplifier;
a stationary part;
a rotary transformer (RTa), for transferring signals between the rotary cylinder and the stationary part;
means (26) for receiving an audio frequency band FM signal; and
means (23) for receiving a control signal which controls at least the recording amplifier or the reproducing amplifier;
characterised by:
means for superposing the control signal on the audio frequency band FM signal for transfer on one channel of the rotary transformer; and
means (10, 11) located in the rotary cylinder for separating the audio frequency band FM signal and the control signal.

2. A magnetic recording/reproducing apparatus as claimed in claim 1, wherein the means for separating the audio frequency band FM signal and the control signal comprises a high pass filter (10) and a low pass filter (11).

3. A magnetic recording/reproducing apparatus as claimed in claim 1 or 2, characterised in that the means for receiving a control signal comprises:
means (26) for receiving a first control signal which controls at least the recording amplifier or the reproducing amplifier and means (22) for receiving a second control signal which is obtained based on information given from a reproduced signal; and characterised by:
in a trick-play reproducing operation, transferring the first control signal from a stationary part to a rotary part of the rotary cylinder and for transferring the second control signal from the rotary part to the stationary part of the rotary cylinder, and for transferring the first and the second control signals through a rotary transformer channel by separating them by using a low pass filter and a high pass filter.

## Patentansprüche

1. Magnetische Aufzeichnungs/Wiedergabevorrichtung, umfassend:
einen sich drehenden Zylinder, der zumindest einen Aufzeichnungsverstärker oder einen Wiedergabeverstärker aufweist;
einen stationären Teil;
einen sich drehenden Transformator (RTa) zum Übertragen von Signalen zwischen dem sich drehenden Zylinder und dem stationären Teil;
eine Vorrichtung (26) zum Empfangen eines FM-Signals im Audiofrequenzbereich; und
eine Vorrichtung (23) zum Empfangen eines Steuersignals, das zumindest den Aufzeichnungsverstärker oder den Wiedergabeverstärker steuert,
gekennzeichnet durch eine Einrichtung, die dem FM-Signal im Audiofrequenzbereich das Steuersignal überlagert, und zwar zum Übertragen in einem Kanal des sich drehenden Transformators; und
durch eine Vorrichtung (10, 11), die im sich drehenden Zylinder angeordnet ist und das FM-Signal in Audiofrequenzbereich und das Steuersignal trennt.

2. Magnetische Aufzeichnungs/Wiedergabevorrichtung nach Anspruch 1, wobei die Vorrichtung zum Trennen des FM-Signals im Audiofrequenzbereich und des Steuersignals ein Hochpaßfilter (10) und ein Tiefpaßfilter (11) umfaßt.

3. Magnetische Aufzeichnungs/Wiedergabevorrichtung nach Anspruch 1 oder 2, dadurch gekennzeichnet, daß die Vorrichtung zum Empfangen eines Steuersignals umfaßt:
eine Vorrichtung (26) zum Empfangen eines ersten Steuersignals, das zumindest den Aufzeichnungsverstärker oder den Wiedergabeverstärker steuert, und eine Vorrichtung (22) zum Empfangen eines zweiten Steuersignals, das man aufgrund von Informationen gewinnt, die ein wiedergegebenes Signal enthält,
und dadurch, daß bei einem Trick-Wiedergabevorgang das erste Steuersignal von einem stationären Teil auf einen sich drehenden Teil des sich drehenden Zylinders übertragen wird, und daß das zweite Steuersignal vom sich drehenden Teil zum stationären Teil des sich drehenden Zylinders übertragen wird, und daß das erste und das zweite Steuersignal über den Kanal eines sich drehenden Transformators übertragen werden, wobei man die Steuersignale mit Hilfe eines Tiefpaßfilters und eines Hochpaßfilters trennt.

## Revendications

1. Un appareil magnétique d'enregistrement/lecture comprenant:
un cylindre rotatif présentant au moins un amplificateur d'enregistrement ou un amplificateur de lecture ;
une partie fixe ;
un transformateur rotatif (RTa) pour transférer des signaux entre le cylindre rotatif et la partie fixe ;
des moyens (26) pour recevoir un signal FM de bande de fréquence audio ; et
des moyens (23) pour recevoir un signal de commande qui commande au moins l'amplificateur d'enregistrement ou l'amplificateur de lecture ;
caractérisé par :
des moyens pour superposer le signal de commande sur le signal FM de bande de fréquence audio en vue d'un transfert sur un canal du transformateur rotatif ; et
des moyens (10, 11) placés dans le cylindre rotatif pour séparer le signal FM de bande de fréquence audio et le signal de commande.

2. Un appareil magnétique d'enregistrement/lecture tel que revendiqué à la revendication 1, dans lequel les moyens pour séparer le signal FM de bande de fréquence audio et le signal de commande comprennent un filtre passe-haut (10) et un filtre passe-bas (11).

3. Un appareil magnétique d'enregistrement/lecture tel que revendiqué à la revendication 1 ou 2, caractérisé en ce que les moyens pour recevoir un signal de commande comprennent :
des moyens (26) pour recevoir un premier signal de commande qui commande au moins l'amplificateur d'enregistrement ou l'amplificateur de lecture et des moyens (22) pour recevoir un second signal de commande qui est obtenu sur la base d'informations données à partir d'un signal de lecture ; et caractérisé par:
dans un fonctionnement de lecture de type lecture d'artifice, des moyens pour transférer le premier signal de commande depuis une partie fixe jusqu'à une partie rotative du cylindre rotatif et pour transférer le second signal de commande depuis la partie rotative jusqu'à la partie fixe du cylindre rotatif, et pour transférer le premier et le second signal de commande à travers un canal du transformateur rotatif en les séparant par l'utilisation d'un filtre passe-bas et d'un filtre passe-haut.
